(19) Europäisches Patentamt

European Patent Office

Office européen des brevets

(11) EP 1 270 943 A2

(12) EUROPEAN PATENT APPLICATION

(43) Date of publication:
02.01.2003 Bulletin 2003/01

(51) Int Cl.⁷: **F04B 27/10**, F04B 39/00,
F16F 15/14

(21) Application number: 02014347.5

(22) Date of filing: 27.06.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 28.06.2001 JP 2001196631

(71) Applicant: **Kabushiki Kaisha Toyota Jidoshokki
Kariya-shi, Aichi-ken (JP)**

(72) Inventors:
• **Kawata, Takeshi
Kariya-shi, Aichi-ken (JP)**
• **Kawaguchi, Masahiro
Kariya-shi, Aichi-ken (JP)**

• Ota, Masaki
**Kariya-shi, Aichi-ken (JP)**
• Adaniya, Taku
**Kariya-shi, Aichi-ken (JP)**
• Suzuki, Takahiro
**Kariya-shi, Aichi-ken (JP)**
• Kanai, Akinobu
**Kariya-shi, Aichi-ken (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Vibration damping system for rotary compressor**

(57) A compressor (100) that employs rollers (43) to suppress resonance. The compressor includes a lug plate (19), which is connected to a rotary drive shaft (16) by means of a rubber damper (19A). The lug plate is arranged in a crank chamber (15). The lug plate has receptacles (41), which guide the pendulum movement of the rollers. When the rotary drive shaft rotates, the pendulum movement of each roller suppresses the resonance of the compressor (100).

**Fig.1**

EP 1 270 943 A2

**Description**

The present invention relates to a compressor, and more particularly, to a compressor that reduces resonance.

A conventional compressor has a damper mechanism. The damper mechanism reduces torque fluctuations of a rotary drive shaft, which drives the compressor, and reduces vibrations of the compressor. Japanese Laid-Open Patent Publication Nos. 2000-213600 and 2000-274489 describe conventional damper mechanisms. One example of the convention damper mechanism is a dynamic damper, which includes a mass body that reciprocates along an arcuate path. Further, the conventional damper mechanism is arranged on a pulley that transmits external drive force to the rotary drive shaft of the compressor.

However, the conventional damper mechanism, which is arranged on the pulley, makes it difficult to reduce the size of the pulley. Since the pulley is located at the outer side of a compressor housing, the pulley and the mass body produce a hitting noise. Thus, the noise level of the compressor is relatively high. Further, the damper mechanism, which is located outside the housing, may rust or collect dust. This may cause the compressor to function abnormally or may lower the durability of the compressor.

It is an object of the present invention to provide a compressor that easily reduces the size of a pulley, reduces noise and resonance, and improves durability.

To achieve the above object, the present invention provides a compressor including a housing, a rotary drive shaft rotatably supported by the housing, and a compression mechanism accommodated in the housing. The compressor includes a rotating body connected to the rotary drive shaft and arranged in the housing. A mass body is supported by the rotating body at a position radially separated from an axis of the rotating body by a predetermined distance. The mass body is supported in a manner permitting pendulum movement.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

> Fig. 1 is a cross-sectional view of a compressor according to a first embodiment of the present invention;
> Fig. 2 is a front view of a lug plate of the compressor of Fig. 1;
> Fig. 3 is a cross-sectional view showing a modification of a swash plate;
> Fig. 4 is a cross-sectional view of a compressor according to a second embodiment of the present invention;
> Fig. 5 is a partial cross-sectional view of a modification of a lug plate; and
> Fig. 6 is front view of the lug plate of Fig. 5.

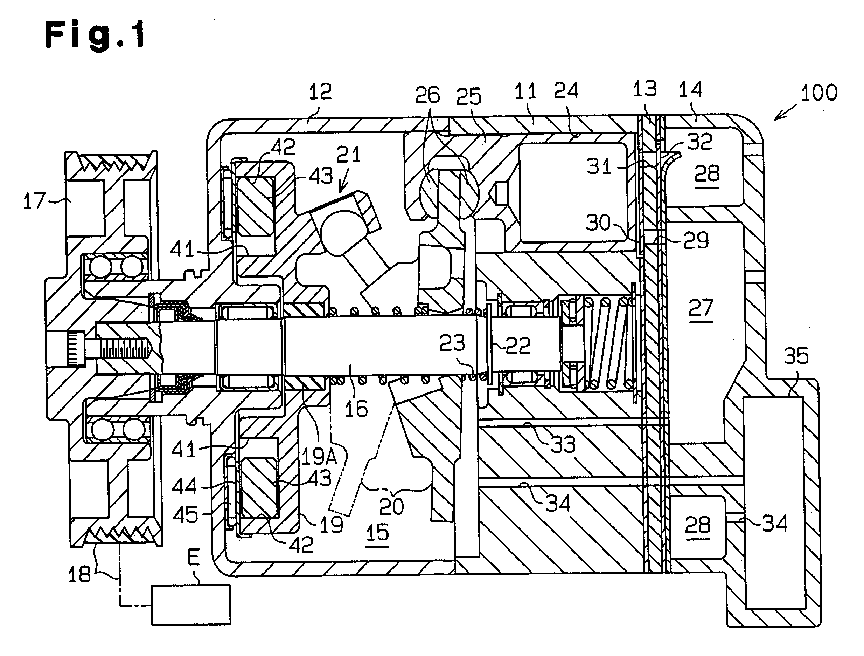

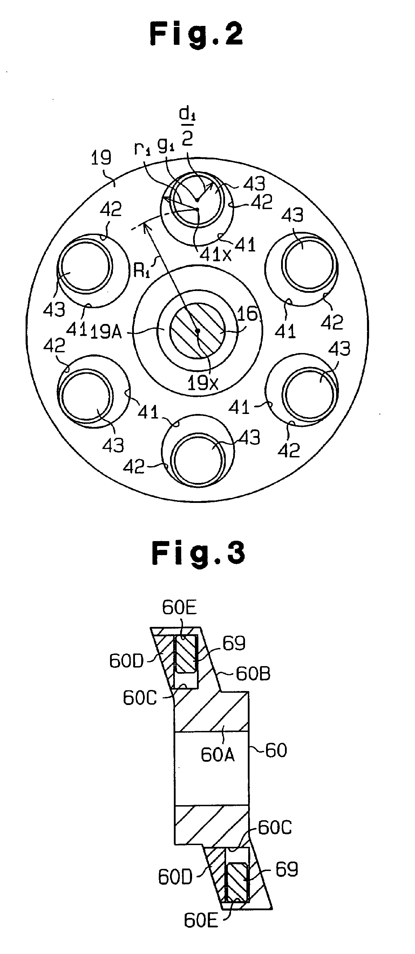

A variable displacement compressor 100, which is used in a vehicle air-conditioner, according to a first embodiment of the present invention will now be discussed with reference to Figs. 1 and 2. As viewed in Fig. 1, the left side is defined as the front side, and the right side is defined as the rear side.

As shown in Fig. 1, the compressor 100 includes a cylinder block 11, a front housing 12, which is coupled to the front end of the cylinder block, and a rear housing 14, which is coupled to the rear end of the cylinder block 11 with a valve plate 13 arranged in between. The cylinder block 11, the front housing 12, the valve plate 13, and the rear housing 14 define a housing of the compressor 100.

A crank chamber 15 is defined in the cylinder block 11 and the front housing 12. Further, the cylinder block 11 and the front housing 12 rotatably support a rotary drive shaft 16, which extends through the crank chamber 15. A pulley 17 is connected to the front end of the rotary drive shaft 16, which projects out of the front housing 12. A vehicle engine E drives the rotary drive shaft 16 by means of a belt 18, which is connected to the pulley 17.

A disk-like lug plate 19 is connected to the rotary drive shaft 16 by means of a friction damper, or cylindrical rubber damper 19A, in the crank chamber 15.

A swash plate 20 is accommodated in the crank chamber 15. The swash plate 20 is connected to the lug plate 19, or rotating body, by means of a hinge mechanism 21. By the connection between the swash plate 20 and the lug plate 19, and the support of the drive shaft, the swash plate 20 rotates integrally with the rotary drive shaft 16. Further, the swash plate 20 is supported so that it slides along the rotary drive shaft 16 and inclines relative to the rotary drive shaft 16.

A ring 22, which is fixed to the rotary drive shaft 16, and a spring 23, which is arranged between the ring 22 and the swash plate 20, determines the minimum inclination of the swash plate 20. The inclination of the swash plate 20 refers to the angle of the swash plate 20 relative to a hypothetical plane that is perpendicular to the axis of the rotary drive shaft 16. The minimum inclination is the angle of the swash plate 20 when it is closest to the hypothetical plane.

A plurality of cylinder bores 24 (only one shown in Fig. 1) extend parallel to the axis of the rotary drive shaft 16 in the cylinder block 11. A single-headed piston 25 reciprocates in each cylinder bore 24. The piston 25, the cylinder bore 24, and the valve plate 13 define a compression chamber. The volume of the compression chamber varies in accordance with the position of the piston 25. Each piston 25 is connected to the peripheral portion of the swash plate 20 by means of shoes 26. Accordingly, the rotation of the rotary drive shaft 16, or the rotation of the inclined swash plate 20, is converted to the linear reciprocation of the pistons 25.

The cylinder block 11 (cylinder bores 24), the rotary drive shaft 16, the lug plate 19, the swash plate 20, the hinge mechanism 21, the piston 25, and the shoes 26 form a variable displacement piston compression mechanism.

A suction chamber 27 and a discharge chamber 28 are defined in the rear housing 14. The valve plate 13 closes the front sides of the suction chamber 27 and the discharge chamber 28. When each piston 25 moves from its top dead center position to its bottom dead center position, refrigerant gas is drawn into the associated cylinder bore 24 (compression chambers) from the suction chamber 27 through a suction port 29 and a suction valve 30, which are formed in the valve plate 13. When the piston 25 moves from the bottom dead center position to the top dead center position, the low-pressure refrigerant gas in the cylinder bore 24 is compressed to a predetermined pressure and released into the discharge chamber 28 through a discharge port 31 and a discharge valve 32, which are formed in the valve plate 13.

The discharge chamber 28 is connected to the suction chamber 27 through an external refrigerant circuit (not shown). The refrigerant is discharged from the discharge chamber 28 and sent into the external refrigerant circuit. After exchanging heat in the external refrigerant circuit, the refrigerant is returned to the suction chamber 27 from the external refrigerant circuit.

A bleeding passage 33, which connects the crank chamber 15 and the suction chamber 27, and a gas supply passage 34, which connects the discharge chamber 28 and the crank chamber 15, are formed in the housing. A control valve 35, which adjusts the opening degree of the gas supply passage 34, is arranged in the gas supply passage 34.

By adjusting the opening degree of the gas supply passage 34, the control valve 35 changes the balance between the amount of refrigerant gas drawn into the crank chamber 15 and the amount of refrigerant gas discharged from the crank chamber 15. In other words, the control valve 35 determines the pressure of the crank chamber 15 (crank pressure Pc) by adjusting the balance between the amount of high-pressure refrigerant gas sent into the crank chamber 15 from the discharge chamber 28 and the amount of refrigerant gas sent out of the crank chamber 15 to the suction chamber 27 through the bleeding passage 33. The difference between the crank pressure Pc and the pressure of the compression chambers, which are the pressures acting on the ends of the pistons 25, alters the inclination of the swash plate 20. This changes the stroke of the pistons 25 and varies the displacement of the compressor.

A lubricant oil mist, which is suspended in the refrigerant gas, lubricates moving parts in the crank chamber 15.

Fig. 2 is a front view of the lug plate 19. A cover 44 is removed from the lug plate 19 in the state of Fig. 2. The lug plate 19 has an axis 19x, which coincides with the axis of the rotary drive shaft 16.

As shown in Figs. 1 and 2, six equally spaced guides, or receptacles 41 (only two shown in Fig. 1), are arranged in the lug plate 19 about the axis 19x in the circumferential direction. A mass body, or cylindrical rigid roller (cylindrical member) 43, is retained in each receptacle 41. Each receptacle 41 has a circumferential surface (guide surface) 42, which guides the rolling of the associated roller 43. More specifically, each receptacle 41 is a cylindrical bore having an axis 41x, which is separated from the axis 19x of the lug plate 19 by a predetermined distance $R_1$. The radius of the cylindrical bore is $r_1$. Thus, the radius of curvature of each guide surface 42 is equal to radius $R_1$.

The mass of each roller 43 is represented by $m_1$. Further, each roller 43 is movable along the guide surface 42 of the associated receptacle 41. More specifically, the diameter $d_1$ of each roller 43 is smaller than the diameter $2r_1$ of each receptacle 41, and the length of each roller 43 in the axial direction is slightly less than the depth of each receptacle 41 (the depth in the axial direction of the lug plate 19). The annular cover 44 is attached to the front end of the lug plate 19. The cover 44 prevents the rollers 43 from falling out of the guide receptacles 41. The cover 44 also functions as a race of a thrust bearing 45 and restricts forward axial movement of the lug plate 19.

When the engine E drives the compressor 100, that is, when the rotary drive shaft 16 is rotating, centrifugal force causes the rollers 43 to contact the guide surfaces 42. In this state, when rotational vibrations of the lug plate 19 results in torque fluctuation, the rollers 43 start to move back and forth (swing) along the guide surface 42 of the associated receptacle 41. In other words, each roller 43 (i.e., the center of gravity of each roller 43) starts a pendulum movement about the axis 41x of the receptacle 41. Accordingly, each roller 43 functions as a centrifugal pendulum when the compressor 100 is driven. In the first embodiment, the dimension and mass of each roller 43 and the position where each roller 43 is arranged on the lug plate 19 (i.e., the position and dimension of each receptacle 41) is set so that the pendulum movement of each roller 43 suppresses torque fluctuation.

The dimension and mass of each roller 43 and the position of each roller 43 on the lug plate 19 will now be discussed.

The centrifugal pendulum movement of each roller 43 suppresses torque fluctuations having a frequency that is equal to the inherent frequency of the roller 43. It is thus preferred that the dimension, mass, and position of the roller 43 be set so that the inherent frequency of the roller 43 be equal to the frequency of the torque fluctuation peak. In this case, vibrations at the torque fluctuation peak are reduced. This effectively reduces the influence of torque fluctuations. The torque fluctuation peak refers to the peak of the fluctuating amount of torque, that is, the rotation order component.

The vibrations of the torque fluctuation and the inherent vibrations of the rollers 43 are proportional to the angular velocity $\omega_1$ of the rotary drive shaft 16, which is related with the rotating speed of the rotary drive shaft 16. The torque fluctuation is formed from various types of peaks that appear periodically. A first peak, in which the torque fluctuation is maximum, appears every predetermined first cycle. The frequency of the first peak is represented by $(\omega_1/2\Pi) \cdot N$. In the representation, $(\omega_1/2\Pi)$ represents the rotation of the rotary drive shaft 16 per unit time, and N represents the number of cylinder bores 24. The nth peak of the nth largest torque fluctuation appears at a cycle that differs from the predetermined first cycle. The frequency of such cycle is represented by $n \cdot (\omega_1/2\Pi) \cdot N$. It has been confirmed through experiments that among the torque fluctuation peaks, the frequency of the nth (n being a natural number) peak has a tendency to have the same value as product $n \cdot (\omega_1/2\Pi) \cdot N$.

The inherent vibration of the roller 43 is calculated from the product of the rotation of the rotary drive shaft 16 per unit time $(\omega_1/2\Pi)$ and the square root of ratio R/r. R represents the distance between the axis of the lug plate 19 and the center axis 41X of the pendulum movement of the roller 43, and r represents the distance between the center axis 41X of the pendulum movement of the roller 43 and the center of gravity $g_1$ of the roller 43.

Accordingly, when the square root of the ratio R/r and the product $n \cdot N$ are equal, the inherent frequency of the roller 43 coincides with the nth largest torque fluctuation peak. This suppresses the torque fluctuation of the vibrations at the nth largest peak.

To effectively reduce torque fluctuation with the pendulum movement of the roller 43, the torque T about the axis 19x of the lug plate 19 that acts on the roller 43 must be equalized with the fluctuating width of the torque fluctuation. The value of the torque T when the frequency at the torque fluctuation peak coincides with the inherent frequency of the rollers 43 is calculated from the next equation.

[Equation 1]

$$T = m \cdot (\omega_a)^2 \cdot (R+r) \cdot R \cdot \varphi$$

In the equation, m is the total mass of every roller 43 ($m = 6 \cdot m_1$), and $\omega_a$ is the average angular velocity of the roller 43 performing the pendulum movement at a minim swing angle $\varphi$.

In the first embodiment, the mass m of the roller is maximized to decrease the values of R, r, and $\varphi$. This enables the torque T to be increased, while preventing the lug plate 19 from being enlarged.

In the first embodiment, the axis 41x of each receptacle 41 coincides with the center of the pendulum movement of the associated roller 43. In other words, the center of the pendulum movement of each roller 43 is located along the associated axis 41x. Accordingly, the distance $R_1$ between the axis 41x and the axis 19x of the lug plate 19 corresponds to R in equation 1.

The distance between the center of pendulum movement of the roller 43, or the axis 41x of the receptacle 41, and the center of gravity $g_1$ of the roller 43 is equal to a value obtained by subtracting half the diameter $d_1$ of the roller 43 from the radius $r_1$ of the receptacle 41. Accordingly, the difference $\{r_1-(d_1/2)\}$ corresponds to r in equation 1.

In the first embodiment, to suppress the maximum peak of the torque fluctuation, $R_1$, $r_1$, and $d_1$ are set so that the square root of ratio $R_1/\{r_1-(d_1/2)\}$, which corresponds with the square root of the ratio R/r, is equalized with N (the value of $n \cdot N$ when n=1 is satisfied).

When various values related with the pendulum movement are set, the roller 43 is considered to be a particle in which the mass of the roller 43 concentrates at the center of gravity $g_1$.

The operation of the compressor 100 will now be discussed.

When the power of the engine E is transmitted to the rotary drive shaft 16 by means of the pulley 17, the swash plate 20 rotates with the rotary drive shaft 16. The rotation of the swash plate 20 reciprocates the pistons 25 with a stroke corresponding to the inclination of the swash plate 20. The movement of the pistons 25 results in the associated cylinder bores 24 repetitively drawing in, compressing, and discharging refrigerant.

When the opening degree of the control valve 35 decreases, the amount of high pressure refrigerant gas supplied to the crank chamber 15 via the gas supply passage 34 from the discharge chamber 28 decreases. This decreases the crank chamber pressure Pc, increases the inclination of the swash plate 20, and increases the displacement of the compressor 100. When the opening degree of the control valve 35 increases, the amount of high pressure refrigerant gas supplied to the crank chamber 15 via the gas supply passage 34 from the discharge chamber 28 increases. This increases the crank chamber pressure Pc, decreases the inclination of the swash plate 20, and decreases the displacement of the compressor 100.

When the rotary drive shaft 16 rotates, the compression reaction of the refrigerant and the reaction resulting from the reciprocation of the pistons 25 are transmitted to the lug plate 19 by the swash plate 20 and the hinge mechanism 21. This produces rotational vibrations in the lug plate 19. The rotational vibrations cause torque fluctuations. The torque fluctuation produces resonance in the compressor 100 and between an external rotating mechanism (e.g., the engine E or an auxiliary device), which is connected to the pulley 17 by the belt 18, and the compressor 100.

When the torque fluctuates, each roller 43 starts the pendulum movement. Due to the pendulum movement, the torque acting about the axis 19x of the lug plate 19 functions to suppress the torque fluctuation. The inherent vibrations of the roller 43 are set to be equal to the vibrations at the highest peak of the torque fluctuation. This suppresses the vibrations at the highest peak of the torque fluctuation and, as a whole, effectively reduces torque fluctuations of the lug plate 19.

The lug plate 19 is connected to the rotary drive shaft 16 by a rubber damper 19A. The torque fluctuation transmitted from the lug plate 19 to the rotary drive shaft 16 is further reduced by the rubber damper 19A. As a result, resonance caused by torque fluctuations is effectively suppressed.

The rubber damper 19A effectively reduces relatively high frequency torque fluctuations. The pendulum movement of the rollers 43 effectively reduces relatively low frequency torque fluctuations.

The first embodiment has the advantages described below.

(1) The rollers 43 are attached to the lug plate 19. Each roller 43 performs a pendulum movement about a point (41x), which is separated from the axis 19x of the lug plate 19 by the predetermined distance $R_1$. The pendulum movement of each roller 43 suppresses resonance produced in the compressor 100 and resonance produced between the compressor 100 and a rotary mechanism, which is connected to the compressor 100 by the belt 18.

(2) The rollers 43 are accommodated in the housing. Thus, rotating members located on the outer side of the housing, such as the pulley 17, may easily be reduced in size. Further, the noise produced when contact occurs between the receptacles 41, the cover 44, and the rollers 43 is absorbed in the housing. Thus, the noise level of the compressor 100 is relatively low. Further, the rollers 43 are not exposed to the environment outside the housing. Thus, abnormalities resulting from rusting of the rollers 43 or dust collecting on the rollers 43 do not occur. Accordingly, resonance is reduced and the compressor 100 has improved durability and weather resistance.

(3) The rollers 43 are arranged in the crank chamber 15. Thus, the rollers 43 are lubricated by the oil mist, which lubricates the compression mechanism.

(4) The rollers 43 have a round cross-section and roll along the associated curved guide surfaces 42, which are formed in the lug plate 19. Since the rollers 43 easily perform the pendulum movement along the associated guide surfaces 42, vibrations of the compressor 100 and resonance produced between the rotating mechanism and the compressor is suppressed.

(5) The rubber damper 19A is arranged between the lug plate 19 and the rotary drive shaft 16.

Thus, in addition to the damper effect of the rollers 43, the damper effect of the rubber dampers 19A is also obtained. This effectively suppresses resonance.

(6) The rollers 43 are arranged in the lug plate 19, which inclinably supports the swash plate 20. Thus, an additional rotating body does not have to be provided for the rollers 43. Accordingly, resonance is suppressed without enlarging the compressor 100.

A fixed displacement compressor 200 according to a second embodiment of the present invention will now be discussed.

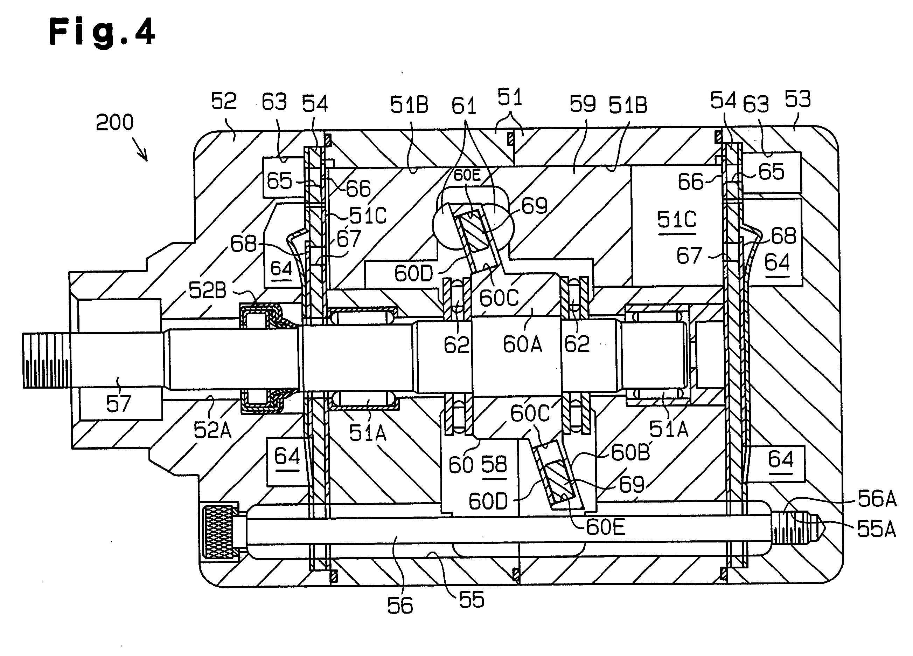

As shown in Fig. 4, the compressor 200 has two cylinder blocks 51, which are connected to each other. The front housing 52 is connected to the front end of the front cylinder block 51 with a valve plate 54 arranged in between. A rear housing 53 is connected to the rear end of the rear cylinder block 51 with a valve plate 54 arranged in between.

Bolt holes 55 extend through the front housing 52 and the two cylinder blocks 51. A bolt 56, which has a threaded portion 56A on its distal end, is inserted through each bolt hole 55 to screw the threaded portion 56A into a threaded hole 55A. The bolt 56 fastens the front housing 52 and the rear housing 53 to the cylinder blocks 51. The cylinder block 51, the front housing 52, and the rear housing 53 form a housing of the compressor 200.

A rotary drive shaft 57 is rotatably supported in the cylinder blocks 51 and the front housing 52 by a pair of radial bearings 51A. The front end of the rotary drive shaft 57 projects outward from the front housing 52 through a center hole 52A, which is formed in the front housing 52. The front end of the rotary drive shaft 57 is connected to a power transmission mechanism (not shown). The rotary drive shaft 57 is driven by an external drive source, such as a vehicle engine, by means of the power transmission mechanism.

A lip seal assembly 52B, which prevents the leakage of refrigerant gas, is attached to the front housing 52 to seal the space between the rotary drive shaft 57 and the wall of the center hole 52A. A plurality of (an N number of) equally spaced cylinder bores 51B extend parallel to the rotary drive shaft 57 through the two cylinder blocks 51. A doubleheaded piston 59 reciprocates in each cylinder bore 51B. Compression chambers 51C are defined between the end surfaces of the pistons 59, the valve plates 54, and the cylinder bores 51B.

A crank chamber 58 is connected to an external refrigerant circuit (not shown). The crank chamber 58 is supplied with relatively low refrigerant gas from the external refrigerant circuit. Thus, the crank chamber 58 serves as part of a refrigerant passage in the housing.

A swash plate 60, which has a sleeve 60A and a disk 60B, are accommodated in the crank chamber 58. The sleeve 60A is fitted on the rotary drive shaft 57. The disk 60B extends radially from the sleeve 60A. The peripheral portion of the disk 60B is connected to the middle portion of each piston 59 by shoes 61.

Two thrust bearings 62 are arranged between the cylinder blocks 51 and the front and rear sides of the sleeve 60A. The two thrust bearings 62 rotatably hold the swash plate 60 in the two cylinder blocks 51. The swash plate 60 converts the rotation of the rotary drive shaft 57 to the reciprocation of the pistons 59. The angle between the swash plate 60 and the rotary drive shaft 57 is fixed. Thus, the stroke of the pistons 59 is fixed.

The shoes 61 and the swash plate 60 form a crank mechanism. The crank mechanism, the cylinder blocks 51 (cylinder bores 51B), the pistons 59, and the rotary drive shaft 57 form a piston compression mechanism.

Suction chambers 63 are defined in the front and rear housings 52, 53. The suction chamber 63 is connected to the bolt holes 55 through a communication hole (not shown). Accordingly, the suction chambers 63 are connected to the crank chamber 58 through the bolt holes 55. Discharge chambers 64 are defined at the inner sides of the suction chambers 63 in the front and rear housings 52, 53. The discharge chamber 64 is connected to an external refrigerant circuit.

Each valve plate 54 includes a plurality of suction ports 65, which are formed in correspondence with the associated suction chambers 63, and a plurality of suction valves 66, which open and close the associated suction ports 65. When each piston 59 moves from its top dead center position to its bottom dead center position in the associated cylinder bore 51B, the corresponding suction valve 66 opens to draw refrigerant gas into the compression chamber 51C from the corresponding suction chamber 63.

Further, each valve plate 54 includes a plurality of discharge ports 67, which are formed in correspondence with the associated discharge chambers 64, and a plurality of discharge valves 68, which open and close the associated discharge ports 67. When each piston 59 moves from the bottom dead center position to the top dead center position in the associated cylinder bore 51B, and the refrigerant gas in the corresponding compression chamber 51C is compressed to a predetermined pressure, the corresponding discharge valve 68 opens to discharge refrigerant into the corresponding discharge chamber 64.

In the second embodiment, the crank chamber 58, the bolt holes 55, the suction chambers 63, the suction ports 65, the compression chambers 51C, the discharge ports 67, and the discharge chambers 64 form the refrigerant passage in the housing. Components in the refrigerant circuit in the housing are lubricated by oil mist, which circulates with refrigerant gas in the passage.

The disk 60B of the swash plate 60 has a plurality of guides, or receptacles 60C (only two shown in Fig. 4). A cylindrical mass body, or roller 69, is accommodated in each receptacle 60C. A cover 60D is attached to the swash plate 60 to close the opening of the receptacles 60C.

Each roller 69 rolls along a guide surface 60E of the receptacles 60C. When viewed from a plane perpendicular to the axis of the swash plate 60 (i.e., axis of the rotary drive shaft 57), the guide surface 60E is arcuate.

When the rotary drive shaft 57 rotates, the compression reaction of the refrigerant gas and the reaction resulting from the reciprocation of the pistons 59 vibrate the swash plate 60. The vibration of the swash plate 60 moves each roller 69 (or the center of gravity of each roller 69) outward by a predetermined distance from the axis of the swash plate 60. Then, the roller 60 performs a pendulum movement about a center point that is separated from the axis of the swash plate 60 by a predetermined distance.

In the same manner as in the first embodiment, in the second embodiment, R and r are set so that the square root of ratio R/r is equalized with N (the value of n·N when n=1 is satisfied). This efficiently suppresses the maximum peak of torque fluctuation, which results from the rotational vibrations of the compressor 200. R represent the distance between the axis of the swash plate 60 and the center point of the pendulum movement of each roller 69, and r represents the distance between the center point of the pendulum movement of each roller 69 and the center of gravity of the roller 69.

In addition to advantages (1) to (4) and (6) of the first embodiment, the second embodiment has the advantages described below.

(7) The inclination between the swash plate 60 and the rotary drive shaft 57 is fixed. Thus, the position of the center point of the pendulum movement of each roller 69 relative to the swash plate 60 does not change. Accordingly, the efficiency for suppressing resonance with the rollers 69 is stably maintained.

The first and second embodiments may be modified as described below.

The lug plate 19 of the first embodiment may be directly connected to the rotary drive shaft 16 without the rubber damper 19A.

A spring, such as a metal plate spring, may be used in lieu of the rubber damper 19A in the first embodiment. In such a case, the lug plate 19 has a recess formed in a surface corresponding to the cylindrical surface of the rotary drive shaft 16, and the rotary drive shaft 16 has a recess formed in a surface corresponding to the lug plate 19. One end of a square plate spring is received in the recess of the lug plate 19. The other end of the plate spring is received in the recess of the rotary drive shaft 16. This connects the lug plate 19 and the rotary drive shaft 16.

In the first embodiment, the cover 44 is also used as the race of the thrust bearing 45. However, the cover 44 does not have to be used as a race. In such a case, a member that differs from the race of the thrust bearing 45 prevents rollers 43 from falling out of the receptacles 41.

In the compressor 100 of the first embodiment, the swash plate 20 rotates integrally with the rotary drive shaft 16. However, the present invention may also be applied to a wobble plate compressor in which a cam plate, or a wobble plate, rotates relative to a rotary drive shaft.

The present invention may be applied to a fixed displacement compressor having pistons with a fixed stroke in lieu of the compressor 100 of the first embodiment.

The swash plate 60 of the second embodiment may be modified as shown in Fig. 3. More specifically, the swash plate 60 of Fig. 3 has cylindrical bores, the axes of which are parallel to the axis of the swash plate 60. In this case, a roller 69 rolls along a guide surface 60E of each cylinder bore to perform a pendulum movement. When the swash plate 60 is rotating, the movement of the roller 69 toward the rotary drive shaft 57 is restricted. This effectively suppresses resonance. Fig. 3 shows the swash plate 60 in a state before it is attached to the rotary drive shaft 57.

The swash plate 60 of the second embodiment may be connected to the rotary drive shaft 57 by means of a friction damper. In such a case, the damper effect obtained by the cooperation between the rollers 69 and the friction damper effectively suppresses resonance.

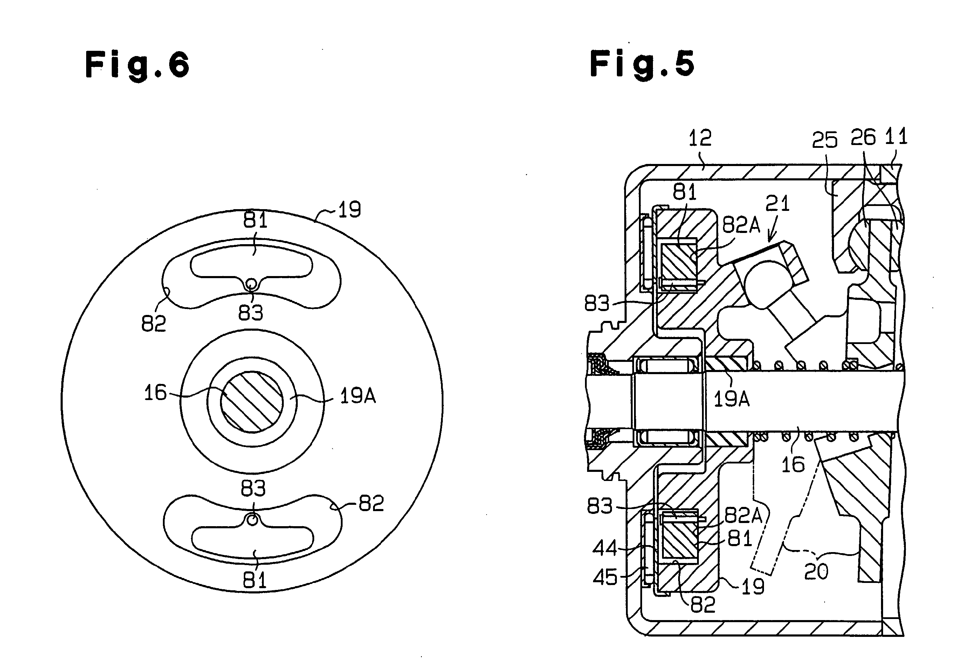

Instead of the rollers 43, 69, which respectively roll along the guide surfaces 42, 60E of the rotating bodies 19, 60, pivot shafts, which are fixed to the rotating body, and mass bodies, each of which is supported by one of the pivot shafts in a manner enabling the pendulum movement, may be employed. For example, as shown in Figs. 5 and 6, the lug plate 19 has receptacles 82, each of which accommodates a mass body, or a pendulum 81. Each receptacle 82 has a inner surface 82A to which a pivot pin 83 is fixed parallel to the axis of the lug plate 19. The pivot pin 83 pivotally supports one of the pendulums 81. The pendulum 81 performs the pendulum movement about the pivot pin 83 in accordance with the rotational vibrations produced when the rotary drive shaft 16 rotates.

In the same manner as the first and second embodiments, it is preferred that R and r be set so that the square root of ratio R/r be equalized with N (the value of n·N when n=1 is satisfied) to suppress the maximum peak of torque fluctuation, which is caused by the rotational vibrations. R represents the distance between the axis of the lug plate 19 and each pivot pin 83, and r represents the distance between the pivot pin 83 and the center of gravity of each pendulum 81.

As shown in Figs. 5 and 6, each pendulum 81 is supported by the associated pivot pin 83, which is fixed to the lug plate 19. However, the pivot pin 83 may be fixed to the pendulum 81, and the pivot pin 83 may be inserted in a hole formed in the lug plate 19. Further, as shown in Figs. 5 and 6, the pendulums 81 are arranged on the lug plate 19. However, the pendulums 81 may be arranged on the swash plate 60 of the second embodiment.

The present invention may be applied to a member other than the lug plate 19 or the swash plate 60 as long as the member is a rotating body connected to a rotary drive shaft that is arranged in a housing of a compressor.

The mass bodies 43, 69, 81 may be changed to spherical bodies.

The square root of ratio R/r does not have to be set so that it is equalized with the value of product n·N, or N, when n=1 is satisfied. For example, the square root of the ratio R/r may be set so that it is equalized with the value of product n·N when n is a natural number of two or greater (e.g., 2 or 3).

The number of mass bodies (e.g., the rollers 43, 69 and the pendulum 81) does not have to be the same as the number of cylinder bores of the compressor as long as there is at least one mass body.

The value corresponding to the square root of the ratio R/r may differ between each mass body (rollers 43, 69, pendulum 81). In such a case, since multiple values, which correspond to the ratio R/r, are set, the fluctuating range of the peaks (rotation order) of the torque fluctuation is suppressed.

A plurality of products n·N (e.g., 1·N, 2·N, 3·N) may correspond to a plurality of the square roots of R/r, respectively. In such a case, more than two peaks of the torque fluctuation starting from the largest one (in this case, three) are suppressed. This further improves the resonance suppressing effect.

It is preferred that the above calculations be performed by considering the mass body as an object having a volume and not as a particle. For example, with regard to the pendulum movement of the cylindrical rollers 43, the ratio R/r may be replaced by ratio 2R/3r. This would include the inertial weight of the mass body. In this case, torque T is obtained from the next equation. In the equation, the vibrations at the peak of the torque fluctuation coincide with the inherent vibrations of the rollers 43.

[Equation 2]

$$T = (3/2) \cdot m \cdot (\omega_a)^2 \cdot (R+r) \cdot R \cdot \varphi$$

Further, when the mass body, which rolls along the guide surface, is spherical, ratio R/r is replaced by ratio 5R/7r to take the inertial weight into consideration. Further, the level of the torque T when the vibrations at the peak of the torque fluctuation in this case matches the inherent vibrations of the spherical mass body is obtained from the next equation.

[Equation 3]

$$T = (7/5) \cdot m \cdot (\omega_a)^2 \cdot (R+r) \cdot R \cdot \varphi$$

When the mass body is neither cylindrical nor spherical, by making various settings taking into consideration the inertial weight that corresponds to the shape of the mass body, resonance may be suppressed more effectively.

Instead of the piston compressors 100, 200 in which pistons reciprocate, the present invention may be applied to a rotary compressor, such as a scroll compressor. In such a case, the mass body is arranged on a rotating body accommodated in the housing of the compressor.

Instead of the compressors 100, 200, in which the rotary drive shafts 16, 57 are driven only by the external drive force E, the present invention may be applied to a compressor having an electric rotating device, such as a motor, arranged in the housing to drive the rotary drive shaft. In such a case, the mass body may be arranged in a rotor of the electric rotating device.

The axis of the pendulum movement of the mass body does not have to be parallel to the axis of the rotating body. For example, as long as the maximum amount of the torque fluctuation is within a desirable range, the axis of the pendulum movement may be inclined relative to the axis of the rotating body.

It should be apparent to those skilled in the art that the present invention may be embodied in many other specific forms without departing from the spirit or scope of the invention. Therefore, the present examples and embodiments are to be considered as illustrative and not restrictive, and the invention is not to be limited to the details given herein, but may be modified within the scope and equivalence of the appended claims.

A compressor (100) that employs rollers (43) to suppress resonance. The compressor includes a lug plate (19), which is connected to a rotary drive shaft (16) by means of a rubber damper (19A). The lug plate is arranged in a crank chamber (15). The lug plate has receptacles (41), which guide the pendulum movement of the rollers. When the rotary drive shaft rotates, the pendulum movement of each roller suppresses the resonance of the compressor (100).

**Claims**

1. A compressor (100; 200) including a housing (11, 12, 13, 14; 51, 52, 53), a rotary drive shaft (16; 57) rotatably supported by the housing, and a compression mechanism accommodated in the housing, the compressor being **characterized by**:

   a rotating body (19; 60) connected to the rotary drive shaft and arranged in the housing; and
   a mass body (43; 69; 81) supported by the rotating body at a position radially separated from an axis (19x) of the rotating body by a predetermined distance ($R_1$), wherein the mass body is supported in a manner permitting pendulum movement.

2. The compressor according to claim 1, wherein the mass body is arranged in the housing.

3. The compressor according to claim 1, wherein the compression mechanism includes a piston (25), which reciprocates when the rotary drive shaft rotates, and a swash plate (20), which converts the rotation of the rotary drive shaft to the reciprocation of the piston, and wherein the compressor further comprises a crank chamber, which accommodates the compression mechanism, and the mass body is arranged in the crank chamber.

4. The compressor according to claim 1, wherein the rotating body has a guide (41; 60C), wherein the center of the guide is separated from the axis (19x) of the rotating body by the predetermined distance ($R_1$), wherein the guide has a curved guide surface (42; 60E), and wherein the mass body is a cylindrical member accommodated in the guide and rolls along the guide surface.

5. The compressor according to claim 4, wherein the guide (41) is one of a plurality of guides, wherein the guides are equally spaced in the circumferential direction of the rotating body.

6. The compressor according to claim 1, further comprising a friction damper (19A) arranged between the rotating body and the rotary drive shaft.

7. The compressor according to claim 1, wherein the compression mechanism is a variable displacement piston compression mechanism including a piston (25), which reciprocates when the rotary drive shaft rotates, and a swash plate (20), which converts the rotation of the rotary drive shaft to the reciprocation of the piston, wherein the rotating body is a lug plate (19), which supports the swash plate in a manner so that the swash plate inclines at an angle relative to the rotary drive shaft, wherein the angle determines the displacement of the compressor, and wherein the angle is altered to change said displacement.

8. The compressor according to claim 7, wherein the guide is a recess formed in the lug plate.

9. The compressor according to claim 8, wherein the recess is closed by a cover (44).

10. The compressor according to claim 1, wherein the compression mechanism is a fixed displacement piston compression mechanism including a piston (25), which reciprocates when the rotary drive shaft rotates, and a swash plate (60), which converts the rotation of the rotary drive shaft to the reciprocation of the piston, and wherein the rotating body is the swash plate.

11. The compressor according to claim 10, wherein the guide is a recess formed in the swash plate.

12. The compressor according to claim 11, wherein the recess is closed by a cover (60D).

# Fig.1

EP 1 270 943 A2

# Fig.2

# Fig.3

# Fig.4

EP 1 270 943 A2

# Fig.6

# Fig.5

EP 1 270 943 A2